(19) **Europäisches Patentamt**

**European Patent Office**

**Office européen des brevets**

(11) **EP 0 989 322 A2**

(12) # EUROPEAN PATENT APPLICATION

(43) Date of publication:
**29.03.2000 Bulletin 2000/13**

(51) Int. Cl.[7]: **F16D 65/56**

(21) Application number: **99118610.7**

(22) Date of filing: **21.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **21.09.1998 JP 26636098**

(71) Applicant:
**NISSHINBO INDUSTRIES INC.**
**Chuo-ku, Tokyo (JP)**

(72) Inventor:
**Hasegawa, Junichi**
**c/o NISSHINBO IND. INC. Nagoya**
**Nagoya-shi Tokyo (JP)**

(74) Representative:
**Sajda, Wolf E., Dipl.-Phys. et al**
**MEISSNER, BOLTE & PARTNER**
**Postfach 86 06 24**
**81633 München (DE)**

(54) **A drum brake device**

(57)    A drum brake device is disclosed which includes an automatic shoe clearance adjustment mechanism (30). The adjustment mechanism (30), also functioning as a first anchor, is provided with male-female screw adjustment mechanisms (31,32) variably supporting respective ends (40a) of a pair of brake shoes (40). Adjustment levers (33) automatically extend the adjustment mechanisms (31,32) by sensing an excessive amount of opening of pivot levers (50) supported at each of the brake shoes (40). The adjustment mechanisms (30) are arranged at the service brake actuator (20) side.

**Fig. 1**

EP 0 989 322 A2

Printed by Xerox (UK) Business Services
2.16.7/3.6

**Description**

BACKGROUND OF THE INVENTION

The present invention relates to a drum brake device in which an individual brake shoe functions as a leading shoe with a self-servo property when it is either moving forward or backward, even though there is only one service brake actuator.

For example, in the document Japanese Patent Application Laid Open No. H10-47 396, a drum brake device of the applicant is disclosed providing a stable braking force almost equivalent to a dual-two-leading type brake device (D2L-type) even though there is only one service brake actuator, e.g. a wheel cylinder.

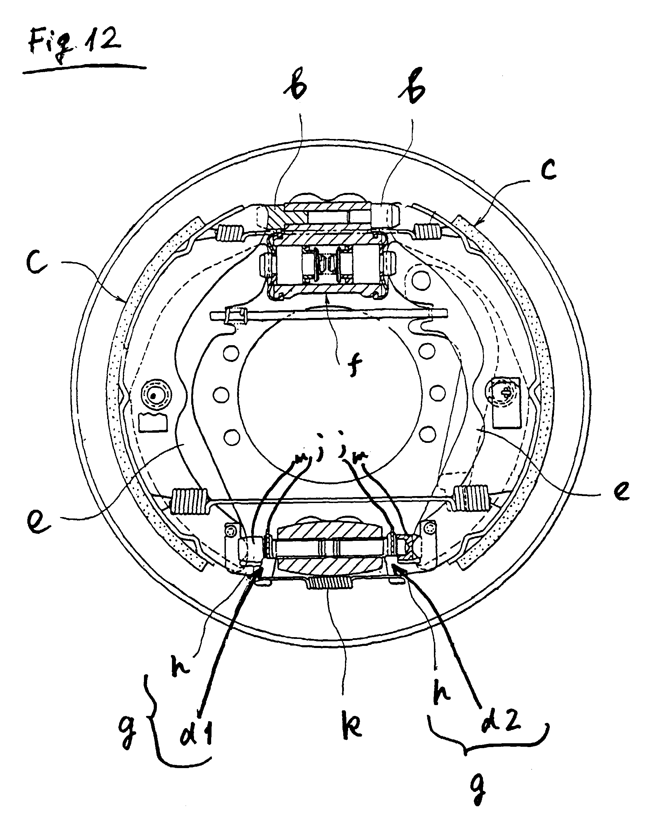

This conventional drum brake device will be explained below with reference to Fig. 12. In the conventional drum brake device, an anchor **b** is mounted between one set of adjacent ends of a pair of facing brake shoes **c**; a shoe clearance adjustment device **d1**, **d2**, also functioning as an anchor, is mounted between the other adjacent ends of the pair of facing brake shoes **c**; pivot levers **e** are pivotally supported with the central region of each brake shoe **c** and the fulcrum; adjacent ends of each pivot lever **e** functionally engage with a service brake actuator **f**; the other adjacent ends of each pivot lever **e** engage with the shoe clearance adjustment device **d1**, **d2**; furthermore, an operation force of the service brake actuator **f** acting on the pivot levers **e** is transmitted to each brake shoe **c** via pivot parts of the pivot levers **e**.

Furthermore, as an automatic clearance adjustment mechanism, a pair of almost L-shaped adjustment levers **h** is symmetrically arranged at both sides of the shoe clearance adjustment device **d1**, **d2** comprising a male-female screw adjustment mechanism; the one arm of each adjustment lever **h** is pivotally supported with each brake shoe **c** as the fulcrum; the other arm of each adjustment lever **h** engages with a toothed adjustment wheel **j** of the adjustment mechanism; and spring means **k** are provided so that a central region of each adjustment lever **h** may elastically contact with a sleeve **m** of the adjustment mechanism.

In addition, the operation of an automatic shoe clearance adjustment device **g** comprising the elements **h**, **d1** and **h**, **d2**, respectively, is such that the automatic shoe clearance adjustment device g senses an excessive opening of the other adjacent end of each brake shoe **c** pivotally supporting the adjustment lever **h** to adjust a shoe clearance between each brake shoe **c** and a corresponding brake drum. Therefore, the rotational direction of the brake drum, when the one shoe clearance adjustment device **d1** is in operation, is reverse to the rotational direction of the brake drum, when the other shoe clearance adjustment device **d2** is in operation.

The conventional drum brake device explained above has the following aspects which need improvement:

When in service brake operation, during which an automatic shoe clearance adjustment is performed, a thrust force acts on the adjustment bolt of the adjustment device. In order to ensure a proper operation of the automatic shoe clearance adjustment against the thrust force, an adjustment spring and an adjustment lever must be designed so that they are strong and large, which increases the size of parts.

An automatic shoe clearance adjustment of a pair of brake shoes which is not conducted in the same rotational direction of the brake drum can cause a problem. For example, a functional difference occurs between the automatic shoe clearance adjustment device, which operates when a vehicle equipped therewith is moving backward, with an extremely low frequency of use and a lower brake temperature compared to a situation when the vehicle is moving forward and an automatic shoe clearance adjustment device, which operates when the vehicle is moving forward.

Accordingly, the situations explained above can cause a difference in a clearance between the brake drum and each brake shoe, whereby a lining of the brake shoe with a smaller clearance is worn out faster.

When in braking operation, brake shoes and pivot levers move together in the rotational direction of a brake drum, and one of both ends of the brake shoes becomes supported by an anchor, thereby generating a braking force.

In such a case, when the brake drum is rotating in the direction to support the brake shoes at the actuator side, an operation force of the actuator operates in the opposite direction to support the brake shoes, thereby decreasing a braking effectiveness:

$$\frac{\text{Brake Torque}}{\text{Operation Force of the Actuator}}$$

SUMMARY OF THE INVENTION

The object underlying the present invention is to provide a drum brake device which enables the performance of a stable adjustment of a shoe clearance under many conditions and which is designed to improve the brake effectiveness.

According to the invention, this object is solved in an advantageous and satisfying manner by a drum brake device comprising the features of the main claim. Further developments of the drum brake device according to the invention are specified in the subclaims.

According to the invention, a drum brake device comprises a pair of facing brake shoes, a first anchor supporting adjacent ends of the pair of facing brake shoes, a second anchor supporting the other adjacent ends of the pair of facing brake shoes, and a pair of pivot levers with one pivot lever pivotally supported on a central region of the one brake shoe as the fulcrum and the other pivot lever pivotally supported with a central region of the other brake shoe as the fulcrum.

A service brake actuator is functionally engaged with the one adjacent ends of the facing pivot levers, while the other adjacent ends of the facing pivot levers are functionally engaged with the second anchor. An operation force of the service brake acting on the one adjacent ends of the pivot levers is transmitted to the brake shoes via a pivotal part of the both pivot levers.

An automatic shoe clearance adjustment device is provided at a service brake actuator side, and the mechanism comprises a pair of male-female screw adjustment members provided at the first anchor and a pair of adjustment levers which are adapted to automatically extend the adjustment member by sensing an excessive opening of each pivot lever.

According to a further development of the drum brake device according to the invention, each of the other adjacent ends of pivot levers is supported by the other anchor with a pivot shape; also, each brake shoe is pivotally supported on the pivot lever so as to be movable in the circumferential direction of the brake drum relative to each pivot lever.

According to a further development of the brake drum device according to the invention, the body of the one anchor adjacent to the service brake actuator is integrally formed with the body of the service brake actuator.

According to another development of the drum brake device according to the present invention, the second anchor supporting the other adjacent ends of the facing brake shoes and the pivot levers is composed by superimposing anchor plates.

According to yet another development of the drum brake device according to the invention, a parking brake actuator is provided comprising a link mechanism which is functionally extended in the vicinity of and between the other adjacent ends of facing pivot levers. The pivot levers face each other leaving a slight clearance between the first anchor and each upper middle portion of the pivot levers; furthermore, an operation force of the parking brake actuator operating on the other adjacent ends of the pivot levers is transmitted to each brake shoe via pivotal parts of both pivot levers.

Further objects, details, features, aspects and advantages of the present invention will be explained below in a detailed description of preferred embodiments with reference to the accompanying drawings.

BRIEF DESCRIPTION OF THE DRAWINGS

Fig. 1      is a plan view of a drum brake device according to a first embodiment of the invention;

Fig. 2      is a cross-section view of Fig. 1 taken along the line II-II in Fig. 1;

Fig. 3      is a cross-section view of Fig. 1 taken along the line III-III in Fig. 1;

Fig. 4      is a cross-section view of Fig. 1 taken along the line IV-IV in Fig. 1;

Fig. 5      is a plan view of an adjustment lever;

Fig. 6      is a cross-section view of Fig. 1 taken along the line VI-VI in Fig. 1;

Fig. 7      is an explanation view of another type of parking brake, where a parking lever is pulled in the vehicle axle direction;

Fig. 8      is a plan view of a drum brake device according to a second embodiment of the invention;

Fig. 9      is a cross-section view of Fig. 8 taken along the line IX-IX in Fig. 8;

Fig. 10     is an explanation cross-section view of the pivot structure of the brake shoe and pivot lever;

Fig. 11     is a cross-section view of Fig. 8 taken along the line XI-XI relating to a third embodiment of the invention where an automatic stroke adjustment mechanism is added to a strut; and

Fig. 12     is a plan view of a conventional drum brake device.

DETAILED DESCRIPTION OF PREFERRED EMBODIMENTS

First Embodiment

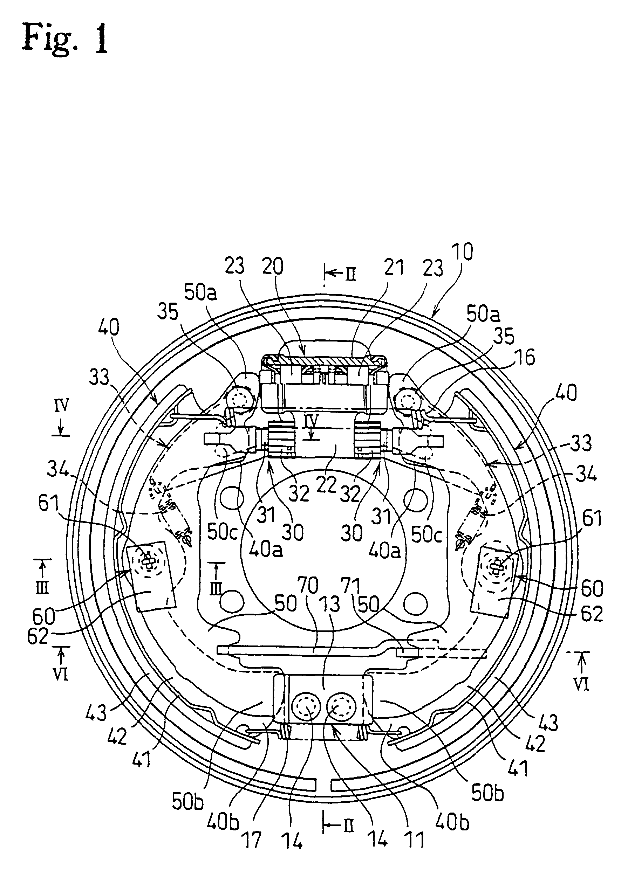

A first embodiment of the invention will be explained below with reference to Figs. 1 to 6 of the drawings.

In Fig. 1, a plan view of a rear drum brake device comprising a parking brake is illustrated.

In the drum brake device of the invention, since the structure of the drum brake device is such that the right half and the left half of the drum brake device in the drawings are symmetrically structured except for the parking brake and the screws of the shoe clearance adjustment devices 30 being formed inversely, the following explanation relates only to the structure of the left half of the drawing, whereas the explanation of the structure of the right half is omitted because the features and details are marked with the same reference numerals as in the left half.

In the present specification, the terms such as "right" and "left" and "upper" and "lower" are used for the sake of convenience in explaining applicable devices and relating to the situation in the various figures of the drawings. However, the orientation of the drum brake device set is by no means limited to what is described with reference to the drawings.

A wheel cylinder 20 serving as a service brake actuator is mounted on the upper portion of a back plate 10, and a shoe clearance adjustment device 30, also functioning as a first anchor, utilizing an anchor body 22 integrally formed with a cylinder body 21, is arranged at the inner side of the brake drum connected adjacent to the wheel cylinder 20. A second anchor 11 is mounted on the lower portion of the back plate 10.

A brake shoe 40 is structured such that a shoe rim 41 and a shoe web 42 are connected to form a T-shape element in cross-section, and a lining 43 is fixed on the periphery of the shoe rim 41.

The one end or upper end 40a of the brake shoe 40 engages with an adjustment bolt 31 functioning as a male-female screw member of the shoe clearance adjustment device 30. At the same time, the other end or lower end 40b abuts against and engages with the side end surface of a flat anchor plate 12a constituting the second anchor 11. This embodiment comprises a structure where the lower end 40b of the brake shoe 40 is supported as a floating anchor.

An arc-shaped pivot lever 50 is superimposed on the shoe web 42 and is provided between the wheel cylinder 20 and the second anchor 11. The one end or upper end 50a of the pivot lever 50 functionally engages with a piston 23 of the wheel cylinder 20. The other end or lower end 50b abuts against and engages with the side flat end surface of an anchor plate 12b constituting the second anchor 11. At the same time, the upper middle portion 50c adjacent to the upper end 50a engages with the adjustment bolt 31 of the shoe clearance adjustment device 30.

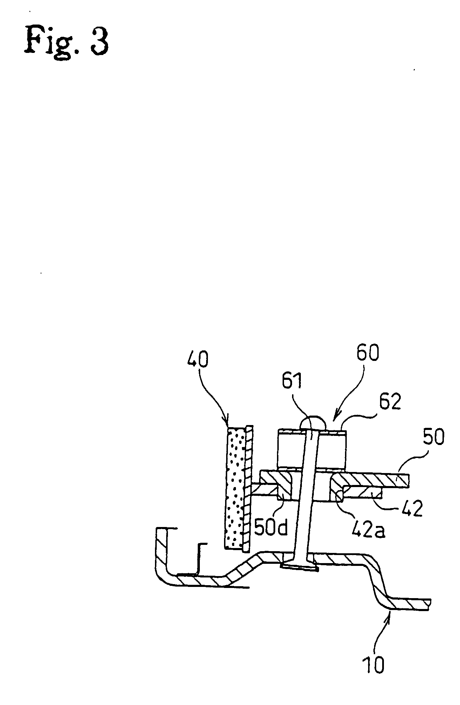

Fig. 3 shows a cross-section view of the pivotal part of the brake shoe 40 and the pivot lever 50 at the left half of the drum brake device. A hollow protuberance 50d is projecting toward the shoe web 42 on the central region of the pivot lever 50. The protuberance 50d is inserted through and is rotatably pivoted in a circular hole 42a formed in the shoe web 42.

In addition, although not shown in the drawings, as a pivot structure, a circular hole may be formed at the pivot lever 50 side and a protuberance may be formed at the shoe web 42 side. Also, a pin may be used to substitute for the protuberance.

A pivotal part of the brake shoe 40 and the pivot lever 50 are supported by a shoe hold pin 61 which is inserted through an opening inside of the protuberance 50d. The one end of the pin 61 is vertically and swingably set on the back plate 10. A plate spring 62 is temporarily fixed by the other end of the pin 61 and is compressed and installed on the pivot lever 50. In other words, by means of a commonly known shoe hold mechanism 60, the brake shoe 40 is elastically held on the back plate 10, and the pivot lever 50 is held on the shoe web 42.

Moreover, a bolt may be used instead of the shoe hold pin 61. The one end of such a bolt would be fixed on the back plate 10, and upper and lower nuts fastened on the other end would movably hold the brake shoe 40 and the pivot lever 50.

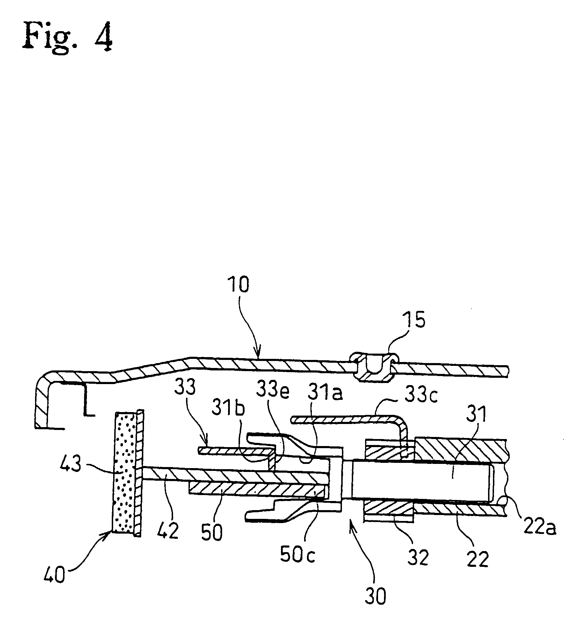

Fig. 4 illustrates an enlarged cross-section view of the left half of the shoe clearance adjustment device 30.

As shown in the drawing, a penetrating hole 22a is formed in an anchor body 22. The male screw of the adjustment bolt 31 is rotatably fitted in the hole 22a.

A notched groove 31a with a step is formed at the left side of the adjustement bolt 31. The upper end of the shoe web 42, i.e. the upper end 40a of the brake shoe 40, abuts against the bottom of the groove 31a. The upper middle portion 50c of the pivot lever 50 engages with the groove 31a with a slight clearance between the pivot lever 50 and the bottom of the groove 31a.

A toothed adjustment wheel 32 is screwed onto the axle portion of the male screw of the adjustment bolt 31.

A number of small teeth are formed on the circumferential surface of the adjustment wheel 32. Moving back of the adjustment bolt 31 relative to the anchor body 22 is restricted by abutting a right side surface of the adjustment wheel 32 against the left surface of the anchor body 22. By controlling the rotation of the adjustment wheel 32, the amount of protrusion of the adjustment bolt 31 relative to the anchor body 22 may be changed.

The shoe clearance adjustment device 30 comprises the adjustment bolt 31 fitted in the anchor body 22 and the adjustment wheel 32 screwed onto the adjustment bolt 31.

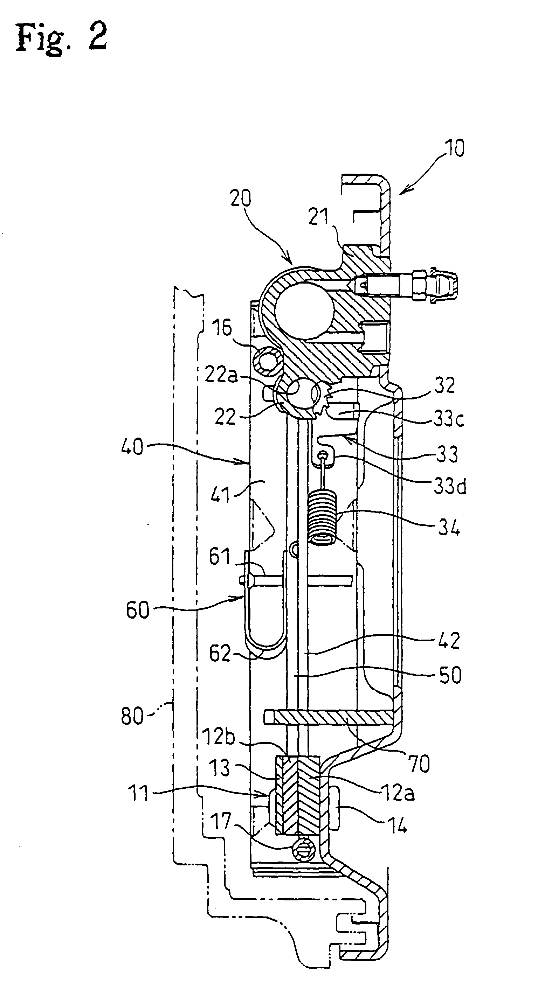

When adjusting the clearance between a lining 43 and a brake drum 80 (indicated by a two-dot chain line in Fig. 2), the clearance may be manually adjusted by inserting a screw driver or the like from the outside of the brake after removing a plug 15 in the back plate 10. Then, the adjustment wheel 32 is manually rotated, and the adjustment bolt 31 is screwed out from or into the wheel 32.

An automatic shoe clearance adjustment device comprises an adjustment lever 33 and an adjustment spring 34 in addition to the structure of the shoe clearance adjustment device 30.

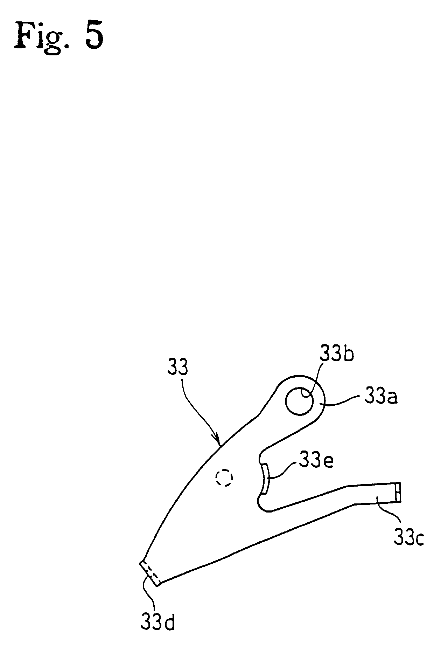

A plan view of the adjustment lever 33 is illustrated in Fig. 5 of the drawings. The adjustment lever 33 as a whole is an almost Y-shaped flat plate. A pin hole 33b is formed in the one branching arm, namely the first arm 33a, and the end of the other branching arm, namely the second arm 33c, is bent out approximately at a right angle.

A hole or slit is formed in the bent end of the non-branching arm, namely a third arm 33d, to temporarily set the one hook of the adjustment spring 34. Furthermore, an edge at the joint section of the first and second arms 33a and 33c is bent at a right angle to form an abutting part 33e.

As shown in Fig. 1 of the drawings, the adjustment lever 33 is designed such that the pin hole 33b of the first arm 33a is pivotally supported by a pin 35 fixed on the pivot lever 50.

The adjustment spring 34 is stretched between the third arm 33d of the adjustment lever 33 and the pivot lever 50. A rotation force in the counterclockwise direction is constantly applied to the adjustment lever 33 with the pin 35 as the fulcrum.

The abutting part 33e abuts against and engages with the stepped surface 31b of the notched groove 31a of the adjustment bolt 31 due to a spring force exerted by the spring 34 in the compressing direction. At the same time, the second arm 33c engages with the adjustment wheel 32, see Fig. 4.

As shown in Fig. 1 of the drawings, one shoe return spring 16 is stretching between the pair of brake shoes 40 adjacent to the wheel cylinder 20, and another shoe return spring 17 is stretching between the pair of brake shoes 40 adjacent to the second anchor 11. Further, in the structure according to the present invention, the moment about the pivot point of the brake shoes 40 on the pivot levers 50 operating on the brake shoes 40 by the one shoe return spring 16 and the other shoe return spring 17 is designed to be larger at the lower ends 40b side than at the upper ends 40a side.

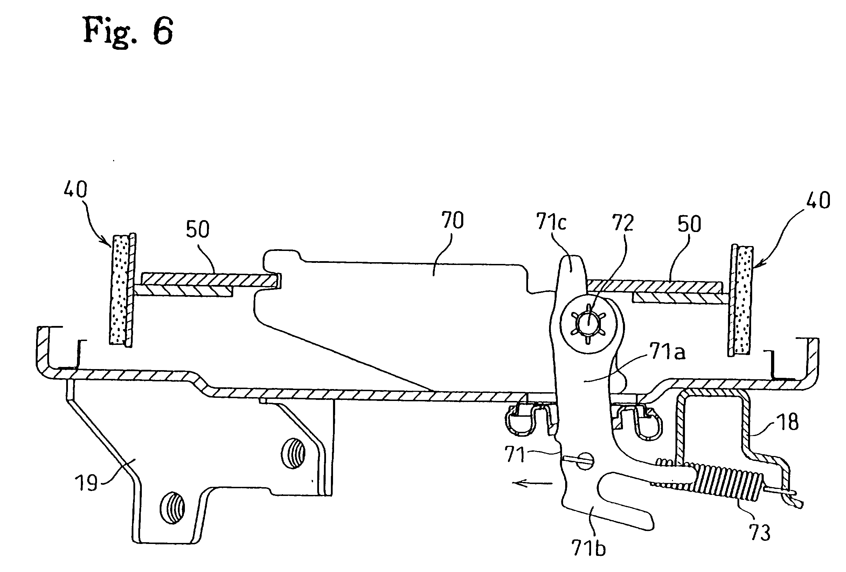

Next, a cross-pull type parking brake will be explained below with reference to Figs. 1 and 6 of the drawings.

The left end of a strut 70 engages with the pivot lever 50 at the left side of the drawing, and at the same time, the right end of the strut 70 is rotatably supported at a mid-portion 71a of an L-shaped brake lever 71 with a pin 72 as the fulcrum.

A notched groove for connecting the inner cable of the parking brake cable, not shown in the drawings, is formed at an outer end 71b of the brake lever 71 freely installed through the back plate 10. An inner end 71c of the brake lever 71 engages with the pivot lever 50 as shown at the right side of the drawing.

In addition, a lever stopper 18 restricts a returning position of the brake lever 71. A bracket 19 fixes an outer casing of a parking brake cable. A return spring 73 is stretched between the brake lever 71 and the lever stopper 18.

In service brake operation, for instance, when the vehicle brake pedal is operated or depressed in order to pressurize the wheel cylinder 20, the pistons 23 press the pivot levers 50 and open the pair of right and left brake shoes 40 following the operation described below. Furthermore, because the opening operation of the right and left brake shoes 40 is the same, an explanation is mainly made for operation of the brake shoe 40 in the left half of the drawing.

When the piston 23 of the wheel cylinder 20 presses the upper end 50a of the pivot lever 50, the pivot lever 50 opens with the point of abutment of the lower end 50b of the pivot lever 50 against the second anchor 11. The opening force of the pivot lever 50 is transmitted to the brake shoe 40 via the protuberance 50d, and the brake shoe 40 frictionally engages with the brake drum 80 (shown in Fig. 2), where the lining 43 is frictionally engaging in order to generate a braking force.

In Fig. 1, when the brake drum (not shown in Fig. 1) is rotating in the counterclockwise direction, the lower end 40b of the brake shoe 40 at the left side of the drawing is supported by the second anchor 11 to function as a leading shoe with a self-servo property.

The upper end 40a of the brake shoe 40 at the right side of the drawing is supported by the adjustment bolt 31 of the shoe clearance adjustment device 40 at the right side of the drawing to function as a leading shoe with a self-servo property. Accordingly, a pair of right and left brake shoes 40 generates a braking force which is the same as the two-leading type.

In addition, when the brake drum is rotating in the clockwise direction, the lower end 40b of the brake shoe 40 at the right side of the drawing is supported by the second anchor 11 to function as a leading shoe with a self-servo property.

The upper end 40a of the brake shoe 40 at the left side of the drawing is supported by the adjustment bolt 31 of the shoe clearance adjustment device 30 at the left side of the drawing to function as a leading shoe with a self-servo property. Consequently, the pair of right and left brake shoes 40 generates a braking force of the two-leading type in the same manner as above.

Accordingly, although there is only one wheel cylinder 20, which operates as the service brake actuator, when the vehicle is moving either forward or backward, the brake shoes provide a stable braking force of a dual-two leading type (D2L-type) functioning as a leading shoe with a self-servo property.

As described above, upon activation of the service brake, the upper end 50a of the pivot lever 50 is pressed to open with the point of the abutment of the second anchor 11 as the fulcrum, and the upper end 40a of the brake shoe 40 opens via the pivotal part.

Following the opening of each upper ends 50a and 40a of the pivot lever 50 and the brake shoe 40, respectively, the shoe web 42 slightly departs from the bottom of the notched groove 31a of the adjustment bolt 31. As a result, when in service brake operation, no thrust force operates on the adjustment bolt 31.

If the pivot lever 50 opens, the pin 35 moves together. At this time, the abutting part 33e of the adjustment lever 33 is pressed against the stepped surface 31b of the adjustment bolt 31 by the spring force of the adjustment spring 34, thereby rotating the second arm 33c in the counterclockwise direction.

Then, the amount of opening of the pivot lever 50 will increase due to the fact that the lining 43 is worn out. If the amount of rotation of the second arm 33c constituting the adjustment lever 33 exceeds the pitch of the adjustment wheel 32, the adjustment wheel 32 is rotated to project the adjustment bolt 31 further from the anchor body 22, thereby automatically adjusting the clearance between the brake drum 80 and the lining 43 to be constant.

Accordingly, when in an automatic shoe clearance adjustment operation, since any thrust force does not operate on the adjustment bolt 31, a stable shoe clearance is maintained even if a spring force of the adjustment spring 34 is small.

In a parking brake operation, as shown in Figs. 1 and 6 of the drawings, if the outer end portion 71b of the brake lever 71, exposed to the outside of the back plate 10, is pulled in the direction of the arrow (see Fig. 6), the portion 71b rotates in the clockwise direction with the pivot point (pin 72), with the strut 70 as the fulcrum. The inner end portion 71c moves the lower end 50b of the pivot lever 50 at the right side of the drawing to the right.

The pivot lever 50 opens with the point of abutment with the adjustment bolt 31 at the right side of the drawing as the fulcrum, thereby opening the brake shoe 40 at the right side of the drawing via the protuberance 50d and similarly opening the pivot lever 50 and the brake shoe 40 pivotally supported on the pivot lever 50 at the left side of the drawing via the strut 70.

Further embodiments

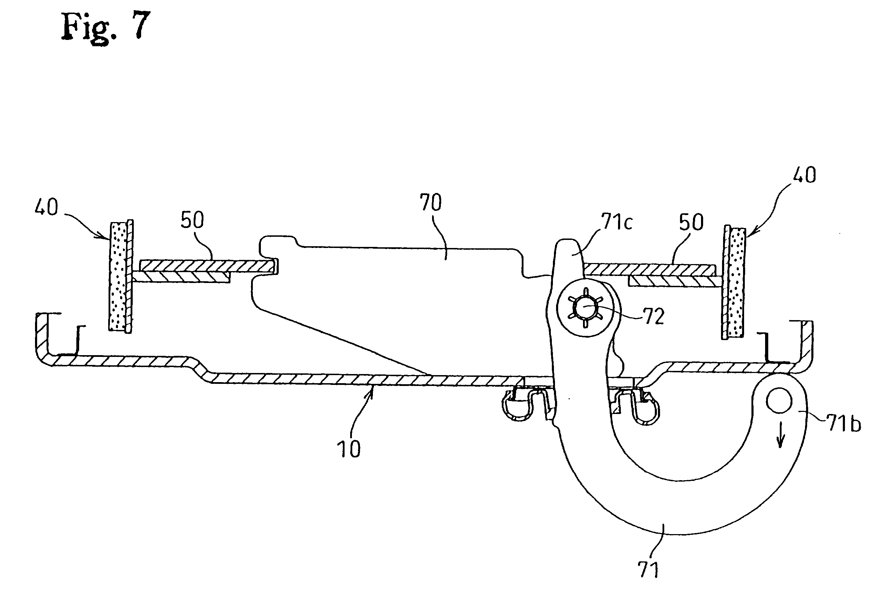

Furthermore, the pulling direction of the brake lever 71 is not limited to the type where the brake lever 71 is to be pulled toward the front side of the vehicle as in the embodiment described above. Rather, the parking brake lever may be of the type where the outer end 71b of the almost J-shaped brake lever 71 is to be pulled in the right angle direction or vehicle axle direction relative to the back plate 10, see Fig. 7 of the drawings.

In the following, further embodiments of the invention will be explained; however, those components which are mechanically the same as in the first embodiment are identified with the same reference signs plus 100, for which an explanation will be omitted hereinafter.

In addition, in the same manner as in the explanation of the first embodiment of the drum brake device according to the invention, since the structure of this drum brake device is such that the right half and the left half of the drum brake device in the drawing are symmetrically structured except for the parking brake, the following explanation of further embodiments illustrates only the structure on the left half of the drawing, and the explanation of the structure on the right half will be omitted.

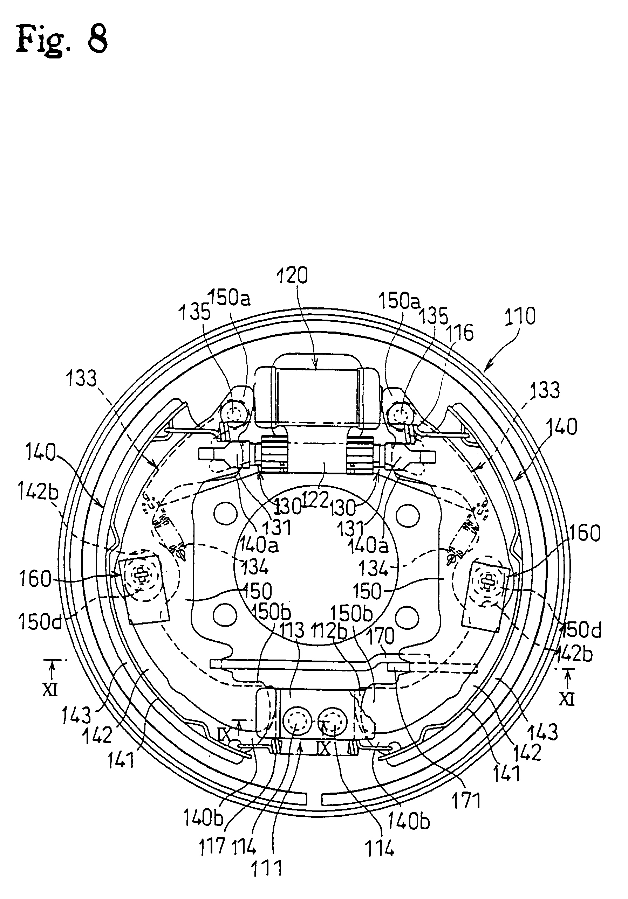

In Figs. 8 to 10, a second anchor 111 at the lower end 150b of a pivot lever 150 is to be of a pivot shape, and Figs. 8 to 10 illustrate another embodiment of movably pivoting a brake shoe 140 in the circumferential direction of the brake drum relative to the pivot lever 150.

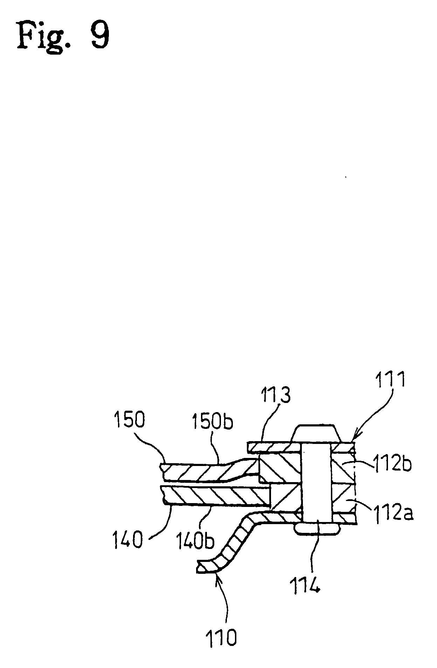

The pivot structure of the second anchor 111 is explained below with reference to Figs. 8 and 9.

Two anchor plates 112a and 112b are superimposed on a protrusion of a back plate 110. A retaining plate 113 is superimposed on the anchor plates 112a and 112b. The anchor plates 112a and 112b and the retaining plate 113 are integrally fixed on the back plate 110 by means of rivets 114. Otherwise, the structure of this embodiment is the same as the first embodiment.

The side end surface of the anchor plate 112a supporting a lower end 140b of a shoe web 142 (a lower end 140b of the brake shoe 140) is a flat surface to support the lower end 140b as a floating anchor.

The side end surface of the anchor plate 112b supporting the lower end 150b of the pivot lever 150 is an arc-shaped surface (pivot) to support the end 150b as a pivot anchor.

The side end surface of the anchor plate 112b is designed as an arc-shaped surface so that the lower end 150b of the pivot lever 150 is rotatable but not vertically slidable, as shown in the drawing.

Even if the anchor types of the pivot lever 150 and the brake shoe 140 are different, the two anchor plates 112a and 112b can each easily be punched by means of a press.

In Fig. 8, the lower end 150b of the pivot lever 150 is designed to be convex, and the side end surface of the anchor plate 112b is designed as a concave arc-shaped surface; however, the convex and concave portions may be exchanged with each other.

The central region of the pivot lever 150 and the brake shoe 140 are pivotally supported so as to be movable in the circumferential direction of the brake drum.

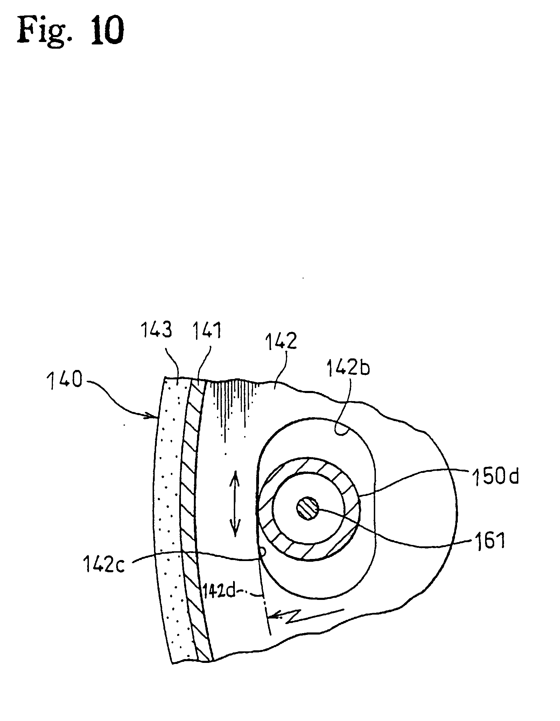

The structure of this pivotal part, i.e. the force transmitting mechanism, will be explained below with reference to Fig. 10 of the drawings. A hollow protuberance 150d integrally formed at the central region of the pivot lever 150 is freely fitted within a long hole 142b formed in the shoe web 142 which extends in the circumferential direction of the brake drum.

The long hole 142b is designed with an arc shape having the brake center as a center point of a radius. This is to enable a relative movement in the circumferential direction of the brake drum between the long hole 142b and the protuberance 150d fitting with the long hole 142b.

The long hole 142b is at least designed in such a manner that a force transmitting surface 142c of the outer side of the brake is fitted with a circular arc 142d with respect to a line to the brake center as a radius. There is no requirement for the shape of the surface facing the force transmitting surface 142c of the long hole 142b.

The brake shoe 140 at the left side when in braking operation is explained next. When the brake shoe 140 opens and begins to operate the rotation force of the brake drum, since the protuberance 150d is to make a relative movement corresponding to the force transmitting surface 142c of the long hole 142b, the brake shoe 140 singularly moves smoothly relative to the pivot lever 150 and functions as a leading shoe with a self-servo property, even if the brake drum is rotating in the clockwise direction, namely by supporting the upper end 140a of the brake shoe 140 at the adjustment bolt 131 of the shoe clearance adjustment device 130.

At this time, an operation force of the wheel cylinder 120 relative to the rotational force of the brake drum operates in the opposite direction; however, the lower end 150b of the pivot lever 150 is unmovably supported by the anchor plate 112b, and the brake shoe 140 singularly moves in the circumferential direction which maintains the braking effectiveness.

In addition, in a braking operation, when the brake drum is rotating in the counterclockwise direction, the lower end of the shoe web 142, i.e. the lower end 140b of the brake shoe 140, is supported by the anchor plate 112a and functions as a leading shoe with a self-servo property in the same manner as explained above. Here also, the brake shoe 140 singularly moves regardless of the pivot lever 150; therefore, any operation force of the wheel cylinder 120 does not cause any harmful effect on the braking effectiveness.

In this embodiment, the anchor plate 112b at the lower end 150b of the pivot lever 150 is provided with a pivot shape, and the brake shoe 140 is movable in the circumferential direction of the brake drum so that an operation force of the service brake does not affect the braking effectiveness as a loss.

In the following, other embodiments of the invention will be explained; however, those components which are mechanically the same as in the first embodiment are identified with the same reference numbers plus 200 for which an explanation will be omitted here.

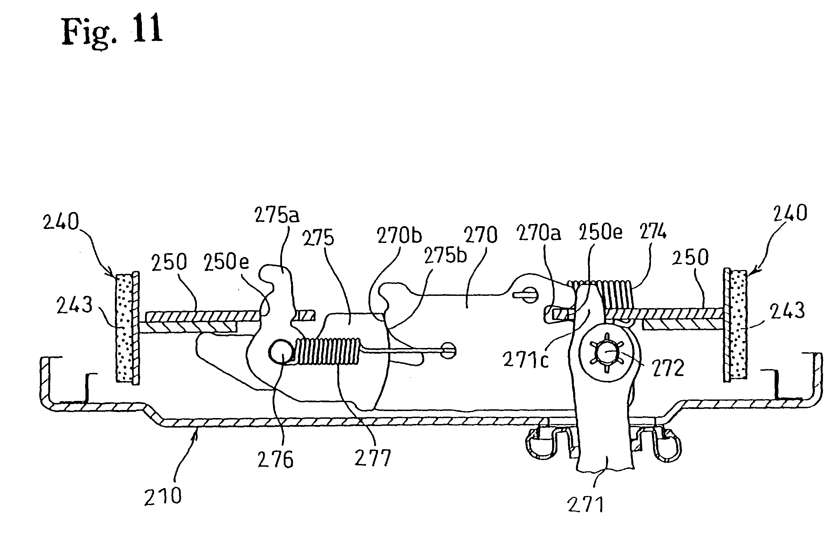

Fig. 11 shows an example of a strut 270 with an automatic stroke adjustment mechanism, wherein a pivot lever 250 at the right side is fitted in a groove 270a of the left end of the strut 270, and an inner end 271c of a brake lever 271 protrudes through and engages with a rectangular hole 250e formed in the pivot lever 250.

A spring force of a spring 274 stretching between the strut 270 and the pivot lever 250 on the right side is applied in a direction to maintain the fitting.

At the left side of the strut 270, a bell crank lever 275 is rotatably supported with a pin 276 as the fulcrum and movable along the plate surface in the longitudinal direction of the strut 270.

Small teeth 275b formed on the peripheral surface at the right side of the bell crank lever 275 engage with small teeth 270b formed on a mid-portion of the strut 270. A spring 277 is stretching between the strut 270 and a pin 276, and applies a spring force in a direction to maintain the engagement between the teeth 270b and 275b.

In addition, a cam arm 275a at the left side of the bell crank lever 275 is freely fitted with a rectangular hole 250e formed in the pivot lever 250 at the left side of the drawing. The mounting load of both springs 274 and 277 is designed so that the load of the spring 274 at the right side of the drawing is greater than that of the spring 277 at the left side of the drawing.

In the above-described structure, when a lining 243 of a shoe 240 is worn out, the cam arm 275a of the bell crank lever 275 is pressed by the rectangular hole 250e to rotate in the counterclockwise direction with the pin 276 as the fulcrum. By the engagement of the teeth 275b of the bell crank lever 275 with the teeth 270b of the strut 270, the point of abutment of the rectangular hole 250e and the cam arm 275a is moved. Therefore, the stroke of the brake lever 271 is always automatically maintained constant, even though the lining 243 is subject to wear.

The present invention provides various advantageous effects which are summarized as follows:

By arranging a shoe clearance adjustment device (which also functions as an anchor) on the service brake actuator side, a thrust force hardly acts on the adjustment bolt when the shoe clearance adjustment is made.

Hence, an adjustment spring force may be smaller and nevertheless a stable shoe clearance is maintained.

An automatic shoe cleareance adjustment of a pair of brake shoes is conducted in the same direction of the brake drum rotation, thereby providing a stable clearance between the brake drum and each brake shoe. Accordingly, there is no need to be concerned with a quick lining wear as a result of one brake shoe load becoming greater.

A pair of pivot levers is each supported by a pivot anchor. Each brake shoe is pivotally supported on the corresponding pivot lever so as to be movable in the circumferential direction of the brake drum relative to each pivot lever. Therefore, the operation force of the service brake does not affect the braking effectiveness as a loss.

An anchor body is formed at one portion of the service brake actuator, and the anchor body is effectively utilized as a component of the shoe clearance adjustment device.

The other anchor supporting each lower end of the brake shoe and pivot lever may be formed by superimposing two anchor plates which may be formed by means of a press. This is an easy processing, and the degree of design freedom for the outer shape is much greater.

It is readily apparent that the drum brake device as described above has the advantage of wide commercial utility. It should be understood that the specific form of the invention described above is intended to be representative only, as certain modifications within the scope of these teachings will be readily apparent to those skilled in the art.

**Claims**

1. A drum brake device, comprising

- a pair of facing brake shoes (40);
- a first anchor (30) supporting adjacent ends (40a) of the pair of facing brake shoes (40);
- a second anchor (11) supporting the other adjacent ends (40b) of the pair of facing brake shoes (40);
- a pair of pivot levers (50) with one pivot lever (50) pivotally supported on a central region of the one brake shoe (40) as the fulcrum, and the other pivot lever (50) pivotally supported on a central region of the other brake shoe (40) as the fulcrum;
- a service brake actuator (20, 23) functionally engaging with the one adjacent ends (50a) of the facing pivot levers (50), the other adjacent ends (50b) of the facing pivot levers (50) being functionally engaging with the second anchor (11, 12a, 12b);
- wherein an operation force of the service brake acting on adjacent ends (50a) of the pivot levers (50) is transmitted to the brake shoes (40) via a pivotal part of the both pivot levers (50);
- wherein an automatic shoe clearance adjustment mechanism (30) is provided at the service brake actuator (20, 23) side, and
- wherein the adjustment mechanism (30) comprises a pair of male-female screw adjustment members (22a, 31) positioned at the first anchor (30), and a pair of adjustment levers (33) automatically extending the adjustment members (22a, 31) by sensing an excessive opening of each pivot lever (50).

2. The device according to claim 1,

    wherein the other adjacent ends (50b) of the pivot levers (50) are each supported by the second anchor (11) with a pivot shape; and wherein each brake shoe (40) is pivotally supported on the pivot lever (50) so as to be movable in the circumferential direction of a brake drum (80) relative to each pivot lever (50).

3. The device according to claim 1 or 2,

    wherein the body of the first anchor (30) is integrally formed with the body (22) of the service brake actuator (20).

4. The device according to any of claims 1 to 3,

    wherein the second anchor (11) supporting the other adjacent ends (40b) of the facing brake shoes (40) and the pivot levers (50) is composed by superimposing a plurality of anchor plates (12a, 12b).

5. The device according to any of claims 1 to 4, further comprising

- a parking brake actuator (70 to 73), the parking brake actuator (70 to 73) including a link mechanism functionally extending in the vicinity of and between the other adjacent ends of facing pivot levers (50);
- wherein the pivot levers (50) face each other leaving a slight clearance between the first anchor (30) and each upper middle portion (50c) of the pivot levers (50); and
- wherein an operation force of the parking brake actuator (70 to 73) operating on the other adjacent ends of the pivot levers (50) is transmitted to each brake shoe (40) via pivotal parts of both pivot levers (50).

# Fig. 1

# Fig. 2

# Fig. 3

# Fig. 4

# Fig. 5

Fig. 6

EP 0 989 322 A2

Fig. 7

EP 0 989 322 A2

# Fig. 8

# Fig. 9

# Fig. 10

Fig. 11

Fig. 12